(19) Europäisches Patentamt
European Patent Office
Office européen des brevets

(11) **EP 4 576 559 A1**

(12) **EUROPEAN PATENT APPLICATION**

(43) Date of publication:
25.06.2025 Bulletin 2025/26

(21) Application number: 23218111.5

(22) Date of filing: **19.12.2023**

(51) International Patent Classification (IPC):
*H02P 21/06* (2016.01)     *H02P 21/12* (2016.01)

(52) Cooperative Patent Classification (CPC):
**H02P 21/06; H02P 21/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **HALL, Sebastian**
**413 17 Göteborg (SE)**
• **HUANG, Zhe**
**413 11 Göteborg (SE)**

(74) Representative: **Ström & Gulliksson AB**
**P.O. Box 4188**
**203 13 Malmö (SE)**

(54) **A COMPUTER SYSTEM AND METHOD FOR HEAT GENERATION**

(57)     A computer system comprising processing circuitry configured to: obtain a maximum achievable flux linkage ($\hat{\psi}$) of an electrical machine (**10**), obtain a reference torque ($T^*_{crop}$) of the electrical machine (**10**) based on the maximum achievable flux linkage ($\hat{\psi}$), obtain a first set of d and q current values ($I_{dmax}$, $I_{qmax}$) resulting in the reference torque ($T^*_{crop}$), obtain a second set of d and q current values ($I_{dmin}$, $I_{qmin}$) resulting the reference torque ($T^*_{crop}$), and produce heat in the electrical machine (**10**) by oscillating the d and q currents between the first and second set of current values ($I_{dmax}$, $I_{qmax}$, $I_{dmin}$, $I_{qmin}$) while maintaining the reference torque ($T^*_{crop}$).

FIG. 1

EP 4 576 559 A1

**Description**

**TECHNICAL FIELD**

The disclosure relates generally to heat generation. In particular aspects, the disclosure relates to a computer system and a method for heat generation in vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

In vehicles, heating devices are used for a number of purposes and commonly a single vehicle is provided with several heating devices. A non-exhaustive list includes cabin heaters, engine block heaters, and exhaust gas heaters. When striving to minimize cost for production of a vehicle one approach is to remove as many redundant components as possible.

One solution to this problem is to use an electrical motor already present in the vehicle for heat generation. However, available methods based on this concept suffer from poor efficiency and limited accessibility during driving of the vehicle.

**SUMMARY**

According to a first aspect of the disclosure, a computer system is provided. The computer system comprises processing circuitry configured to: obtain a maximum achievable flux linkage of an electrical machine, obtain a reference torque of the electrical machine based on the maximum achievable flux linkage, obtain a first set of d and q current values resulting in the reference torque, obtain a second set of d and q current values resulting the reference torque, and produce heat in the electrical machine by oscillating the d and q currents between the first and second set of current values while maintaining the reference torque. The first aspect of the disclosure may seek to efficiently provide heat generation by the electrical machine also during normal operation of the electrical machine. A technical benefit may include allowing the currents to oscillate for increased heat generation in the stator of the electrical machine, which is beneficial if the machine is cooled by a liquid coolant in the housing. Further, a pulsating field in the rotor will heat the magnets of the electrical machine. This is especially important when dealing with permanent magnet materials that easily demagnetize at cold temperatures. Further, precise control over the torque is enabled by following the iso-torque line with all current combinations which are allowed considering the voltage and current constraints. It is also possible to impose time-varying fields in the stator and rotor while still maintaining a constant torque, as well as making it possible to heat magnets and the rotor in a controlled fashion, also during driving.

Optionally in some examples, including in at least one preferred example, the processing circuitry is further configured to: obtain the maximum achievable flux linkage based on the angular frequency of the electrical machine. A technical benefit may include a simple approach to a speed dependent flux constraint for the dq currents.

Optionally in some examples, including in at least one preferred example, the processing circuitry is further

$$\widehat{\psi} = \frac{U_{DC}}{\sqrt{3} \cdot \omega}$$

configured to: obtain the maximum achievable flux linkage as , where $U_{Dc}$ is the terminal voltage of the electrical machine. A technical benefit may include a simple approach to adding a voltage constraint for the dq currents.

Optionally in some examples, including in at least one preferred example, the processing circuitry is further configured to: obtain a maximum torque of the electrical machine based on the maximum achievable flux linkage, and crop the reference torque of the electrical machine based on the maximum torque. A technical benefit may include preventing over voltage of the electrical machine.

Optionally in some examples, including in at least one preferred example, the processing circuitry is further configured to: obtain the first set of d and q current values as a maximum d current value and a maximum q current value. A technical benefit may include using a first reference set of dq currents corresponding to a maximum limit for the currents, thereby increasing the current span.

Optionally in some examples, including in at least one preferred example, the processing circuitry is further configured to: obtain the second set of d and q current values as a minimum d current value and a minimum q current value. A technical benefit may include using a second reference set of dq currents corresponding to a minimum limit for the currents, thereby maximizing the current span.

Optionally in some examples, including in at least one preferred example, the processing circuitry is further configured to: obtain a normalized current factor of the electrical machine based on the normalized reference torque. A technical benefit may include a simple parameter allowing for fast reference and lookup in associated current tables.

Optionally in some examples, including in at least one preferred example, the processing circuitry is further configured to: obtain a cropped normalized current factor based on the normalized reference torque. A technical benefit may include a further increase in processing speed when obtaining the reference currents.

Optionally in some examples, including in at least one preferred example, the processing circuitry is further configured to: oscillate the d and q currents between the first and second set of current values by a frequency of 10-50 Hz, preferably by a frequency of 15-25 Hz. A technical benefit may include a robust and efficient heat generation.

Optionally in some examples, including in at least one preferred example, the processing circuitry is further configured to: obtain the maximum achievable flux linkage based on the angular frequency of the electrical machine, obtain the maximum achievable flux linkage as $\widehat{\psi} = \frac{U_{DC}}{\sqrt{3} \cdot \omega}$, where $U_{DC}$ is the terminal voltage of the electrical machine, obtain a maximum torque of the electrical machine based on the maximum achievable flux linkage, crop the reference torque of the electrical machine based on the maximum torque, obtain the first set of d and q current values as a maximum d current value and a maximum q current value from a current reference lookup table, obtain the second set of d and q current values as a minimum d current value and a minimum q current value from a current reference lookup table, obtain a normalized current factor of the electrical machine based on the normalized reference torque, obtain a cropped normalized current factor based on the normalized reference torque, and oscillate the d and q currents between the first and second set of current values by a frequency of 10-50 Hz, preferably by a frequency of 15-25 Hz, thereby producing heat in windings and/or a stator of the electrical machine.

According to a second aspect of the disclosure, a vehicle is provided. The vehicle comprises the computer system of the first aspect.

Optionally in some examples, including in at least one preferred example, the vehicle comprises: an electrical machine, and a heat generation system configured to transmit a request for increased heat generation to the computer system. A technical benefit may include using the electrical machine to produce heat, thereby reducing the need for extra heating devices of the vehicle.

According to a third aspect of the disclosure, a computer-implemented method is provided. The computer-implemented method comprises: obtaining, by processing circuitry of a computer system, a maximum achievable flux linkage of an electrical machine, obtaining, by the processing circuitry, a reference torque of the electrical machine based on the maximum achievable flux linkage, obtaining, by the processing circuitry, a first set of d and q current values resulting in the reference torque, obtaining, by the processing circuitry, a second set of d and q current values resulting the reference torque, and producing, by the processing circuitry, heat in the electrical machine by oscillating the d and q currents between the first and second set of current values while maintaining the reference torque. The third aspect of the disclosure may seek to efficiently provide heat generation by the electrical machine also during normal operation of the electrical machine. A technical benefit may include allowing the oscillating currents to increase the heat generation in the stator of the electrical machine, which is beneficial if the machine is cooled by a liquid coolant in the housing.

Optionally in some examples, including in at least one preferred example, the method further comprises: obtaining, by the processing circuitry, the maximum achievable flux linkage based on the angular frequency of the electrical machine. A technical benefit may include a simple approach to a speed dependent flux constraint for the dq currents.

Optionally in some examples, including in at least one preferred example, the method further comprising: obtaining, by the processing circuitry, a maximum torque of the electrical machine based on the maximum achievable flux linkage, and cropping, by the processing circuitry, the reference torque of the electrical machine based on the maximum torque. A technical benefit may include preventing over voltage of the electrical machine.

Optionally in some examples, including in at least one preferred example, the method further comprising: obtaining, by the processing circuitry, the first set of d and q current values as a maximum d current value and a maximum q current value. A technical benefit may include using a first reference set of dq currents corresponding to a maximum limit for the currents, thereby increasing the current span.

Optionally in some examples, including in at least one preferred example, the method further comprising: obtaining, by the processing circuitry, the second set of d and q current values as a minimum d current value and a minimum q current value. A technical benefit may include using a second reference set of dq currents corresponding to a minimum limit for the currents, thereby maximizing the current span.

According to a fourth aspect of the disclosure, a computer program product is provided. The computer program product comprises program code for performing, when executed by the processing circuitry, the method of the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

FIG. 1 is an exemplary side view of a vehicle according to an example.
FIG. 2 is an exemplary diagram of an electrical machine and a heat generation system according to an example.
FIG. 3 is an exemplary diagram of a heat generation system according to an example.
FIG. 4A is an iso-torque diagram according to an example.
FIG. 4B is an iso-torque diagram according to an example.
FIG. 5 are a series of simulation diagrams according to an example.
FIG. 6 is an exemplary diagram of a heat generation system according to a further example.
FIG. 7 is a flow chart of an exemplary method to assist a host vehicle in traversing an upcoming road segment according to an example.
FIG. 8 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The examples presented herein provide a solution to use an electrical machine of a vehicle to generate heat in a controlled manner. For a requested torque, the electrical machine is controlled by selecting d and q current values on the same iso-torque curve, and by oscillating the d and q currents between the selected values to generate excessive heat in the electrical machine. This heat can be utilized by other components of the vehicle, thereby allowing a reduction of heating capacity of the existing components or even allowing one or more dedicated heating components to be removed from the vehicle architecture. In particular, control of the electrical machine is performed by considering a voltage limit which is used to crop the d and q current values, thereby allowing heat to be generated also at higher speeds of the electrical machine.

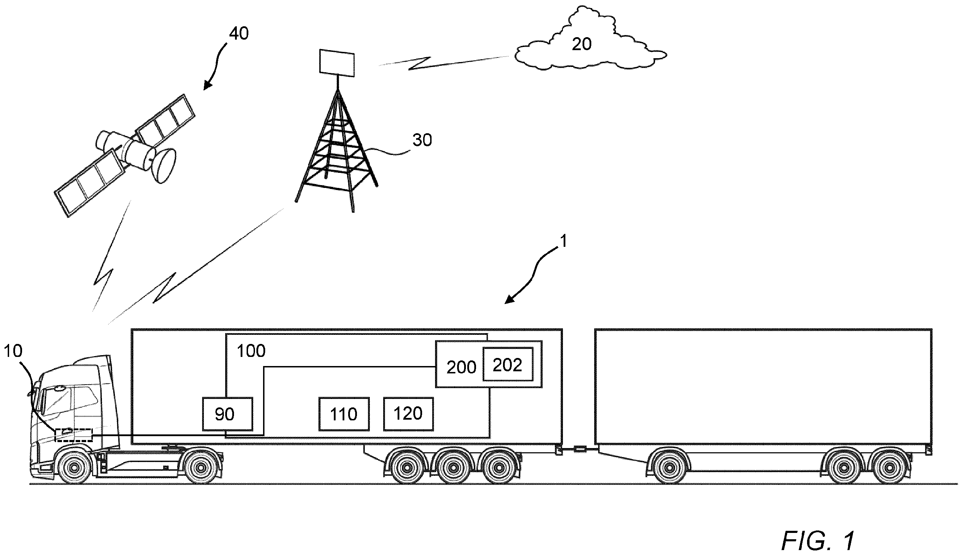

FIG. 1 is an exemplary view of a vehicle 1 according to one example. The vehicle 1 comprises one or more electrical machines 10, and the vehicle 1 is programmed to generate heat in the one or more electrical machines 10, as will be described further in the following. At least one of the electrical machines 10 is preferably a traction motor, however in some examples at least one of the one or more electrical machines 10 is a machine for another purpose, such as for power take off.

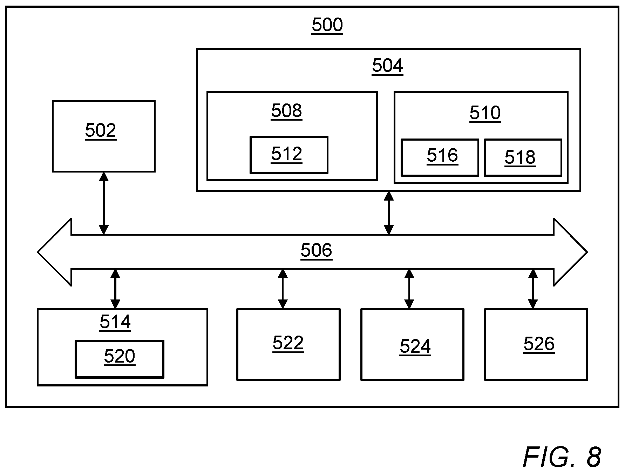

The vehicle 1 comprises, at least to some extent, processing circuitry 110 forming part of a computer system 100 (see FIG. 8). The processing circuitry 110 is configured to implement a heat generation system 200. At least one electrical machine 10 forms part of, or is in communication with, the heat generation system 200.

The vehicle 1 may further comprise communications circuitry 90 configured to receive and/or send communications. The communications circuitry 90 may be configured to enable the vehicle 1 to communicate with one or more external devices or systems such as a cloud server 20. The communication with the external devices or systems may be directly or via a communications interface such as a cellular communications interface 30, such as a radio base station. The cloud server 20 may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry 90 may, additionally or alternatively, be configured to enable the vehicle 1 to be operatively connected to a Global Navigation Satellite System (GNSS) 40 exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle 1 may for example be configured to utilize data obtain from the GNSS 40 to determine a geographical location of the vehicle 1.

The vehicle 1 in FIG. 1 comprises the computer system 100 and the heat generation system 200. The computer system 100 may be operatively connected to the heat generation system 200 and optionally to the communications circuitry 90 of the vehicle 1. The computer system 100 comprises processing circuitry 110. The computer system 100 may comprise a storage device 120, advantageously a non-volatile storage device such as a hard disk drives (HDDs), solid-state drives (SSDs) etc. In some examples, the storage device 120 is operatively connected to the computer system 100.

The heat generation system **200** may comprise heat generation system processing circuitry **202;** the heat generation system processing circuitry **202** may be part of the processing circuitry **110** of the computer system **100.**

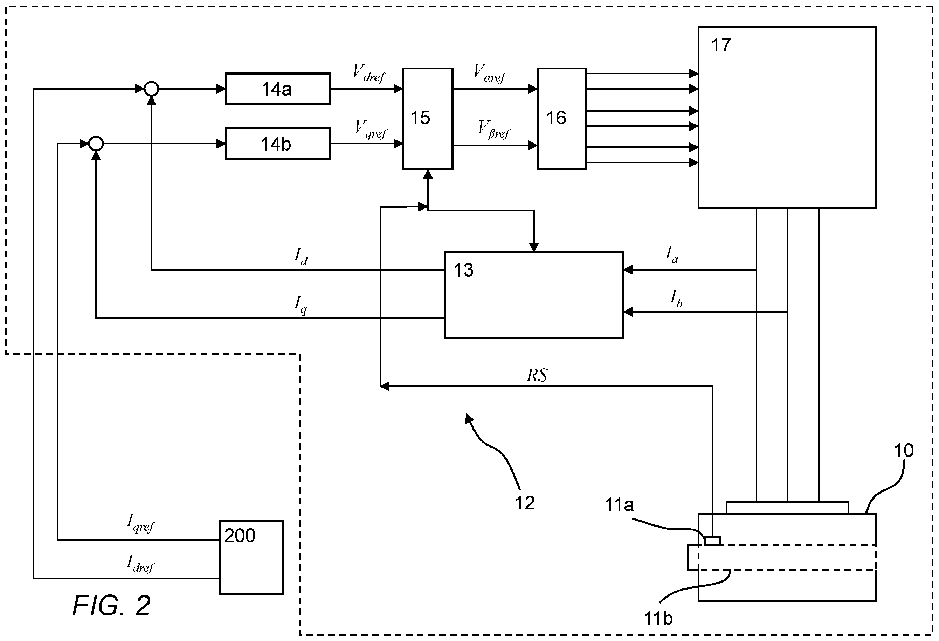

With reference to **FIG. 2,** some general comments on control of electrical machines will be given.

The dq frame is a mathematical tool used to simplify the analysis and control of electrical machines, such as electric motors or generators.

The dq frame is a coordinate system that rotates with the rotor of the electrical machine, with the d-axis aligned with the magnetic field from the permanent magnets in the rotor, i.e. the magnetization field, and the q-axis 90 degrees ahead of the d-axis. By transforming the three-phase electrical quantities of the machine (i.e. with regards to voltage and current) from the stationary orthogonal frame to the rotating dq frame, it is possible to represent the behavior of the electrical machine as a set of two variables, i.e. the direct-axis (d-axis) and the quadrature-axis (q-axis) components.

The d-axis and the q-axis components may represent any electrical or magnetic quantity (such as current, voltage, or flux) that changes in a three-phase system when the phases are shifted 120 degrees in space and time.

Using the dq frame, it is possible to control the behavior of the electrical machine with regards to speed and torque output by manipulating the d-axis and q-axis components of the voltage and current.

A commonly used way to control electrical machines is called field-oriented control (FOC). FOC involves adjusting the d-axis and q-axis components to control the machine's magnetic field. By adjusting these components in real-time, it is possible to maintain a desired speed or torque output from the machine.

FOC typically requires the position of the rotor as an input. For this purpose, a resolver may be arranged at the rotor shaft, providing resolver signals indicative of the position of the rotor.

In **FIG. 2** an exemplary system diagram of a heat generation system **200** is shown. In the shown example, the heat generation system **200** is connected to an electrical machine **10** that implements a motor control system **12.** The electrical machine **10** may be provided with a resolver **11a** configured to transmit a resolver signal **RS** being indicative of the actual position of a rotor **11b** of the electrical machine **10.**

The heat generation system **200** is configured to provide control signals $I_{qref}$, $I_{dref}$ for field-oriented control of the electrical machine **10.** The motor control system **12** is configured to receive the control signals $I_{qref}$, $I_{dref}$ for providing the desired control of the electrical machine **10.** The motor control system **12** comprises a transformation circuitry **13** configured to measure and transform the motor phase currents to the dq frame, resulting in measured dq frame currents $I_d$ and $I_q$. These transformed currents $I_d$ and $I_q$ are compared to the control signals $I_{dref}$ and $I_{qref}$ (i.e. the flux reference and the torque reference) by regulators **14a, 14b,** outputting reference voltages $V_{dref}$ and $V_{qref}$ in the dq frame. An inverse transformation circuitry **15** is configured to invert the reference voltages $V_{dref}$ and $V_{qref}$ to the voltage components $V_{\alpha ref}$ and $V_{\beta ref}$ of the stator vector voltage in the stationary orthogonal reference frame. These reference voltages are inputs to a space vector pulse-width modulator **16** which is configured to provide drive signals to an inverter **17.**

Each of the transformation circuitry **13** and the inverse transformation circuitry **15** may require information of the position of the rotor **11b**, which may be provided from the resolver **11a.**

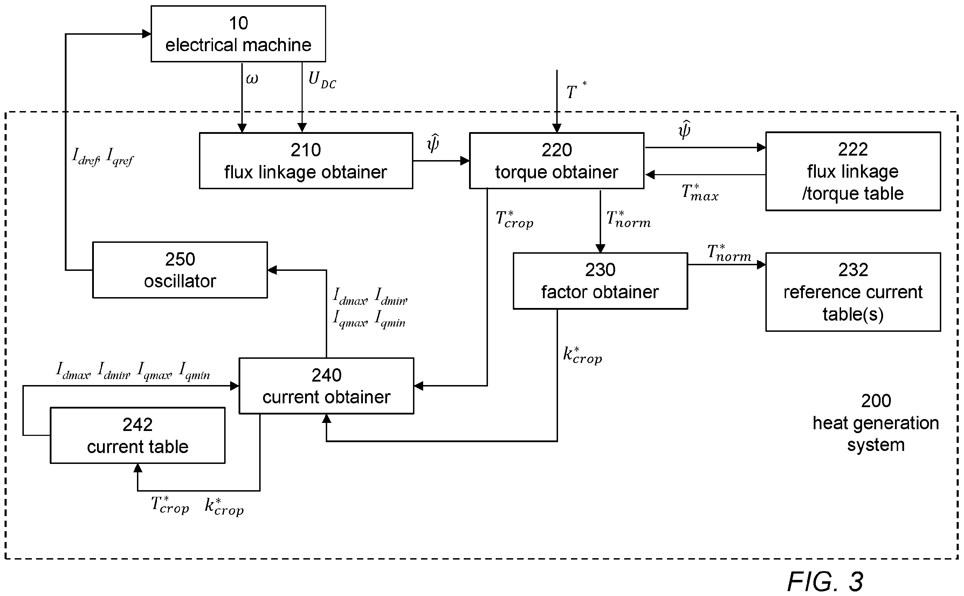

**FIG. 3** is a schematic diagram of the heat generation system **200** according to one example. The heat generation system **200** comprises a flux linkage obtainer **210** configured to obtain the maximum achievable flux linkage ψ of the electrical machine **10.** The flux linkage obtainer **210** may for this purpose be configured to estimate the flux linkage that is allowed in the stator windings of the electrical machine **10,** which is approximately inversely related to the speed of the electrical machine **10.** In a preferred example, this is done by assuming that the maximum voltage references that the current controller can give is the same as the maximum of the pulse-width modulation that controls the inverter. In such case, a space-vector scheme without overmodulation and with amplitude-invariant *dq* quantities can be considered, and the limit therefore becomes $\frac{U_{DC}}{\sqrt{3}}$. Assuming this, the maximum achievable flux linkage that can be linked with the stator windings without causing an over voltage is estimated by

$$\hat{\psi} = \frac{U_{DC}}{\sqrt{3}\cdot\omega} \qquad (1)$$

where $\omega$ is the electrical angular frequency of the electrical machine **10.**

The heat generation system **200** further comprises a torque obtainer **220.** The torque obtainer **220** is configured to obtain a reference torque $T^*_{crop}$ of the electrical machine **10** based on the maximum achievable flux linkage ψ obtained by the flux linkage obtainer **210.** For this, a torque command may be received by the torque obtainer **220,** corresponding to a requested torque $T^*$ of the electrical machine **10.** The torque obtainer **220** may receive the maximum achievable flux linkage ψ from the flux linkage obtainer **210** and use this as input to a flux linkage/torque lookup table **222.** The flux linkage/torque lookup table **222** will return a value corresponding to the maximum torque $T^*_{max}$ of the electrical machine **10** given the achievable flux linkage $\psi$.. From the requested torque $T^*$ and the maximum torque $T^*_{max}$ the torque obtainer **220** will output a reference torque $T^*_{crop}$ to be used for control of the electrical machine **10**; if the maximum torque $T^*_{max}$ is lower than the requested torque $T^*$, the requested torque $T^*$ will be cropped such that the resulting reference torque $T^*_{crop}$ equals $T^*_{max}$.

The flux/torque lookup table **222** may be stored locally or remotely with reference to the heat generation system **200**. In the shown example the flux/torque lookup table **222** forms part of the heat generation system **200**; in another example the heat generation system **200** is in communication with the flux/torque lookup table **222**.

The flux/torque lookup table **222** may be created by first defining the flux levels in an equidistant vector. The maximum torque is then derived for each flux level using the following equations:

$$f(i_d, i_q) = -\frac{3}{2} pp \left( \psi_{PM}(i_d, i_q) \cdot i_q - i_d i_q \cdot \left( L_q(i_d, i_q) - L_d(i_d, i_q) \right) \right) (2),$$

$$\sqrt{i_d^2 + i_q^2} \leq i_{max} \ (3),$$

and

$$\sqrt{\psi_d^2(i_d, i_q) + \psi_q^2(i_d, i_q)} \leq \psi_{max} \ (4).$$

Equation (2) is here a cost function, where $\psi_{PM}(i_d, i_q)$, $L_q(i_d, i_q)$ and $L_d(i_d, i_q)$ in (4) can be found using separate lookup tables.

Equations (3) and (4) act as constraints for the cost function defined by Equation (2).

The torque obtainer **220** is also determining a normalized reference torque $T^*_{norm}$. For example, the normalization may be done with regards to a scale of 0 to 1, where 0 corresponds to the lowest possible torque of the electrical machine **10** while 1 corresponds to the maximum possible torque of the electrical machine **10**. If considering a positive scale only, 0 may correspond to zero torque. If the resulting reference torque $T^*_{crop}$ is 80% of the maximum possible torque of the electrical machine **10,** the normalized reference torque $T^*_{norm}$ would be 0.8.

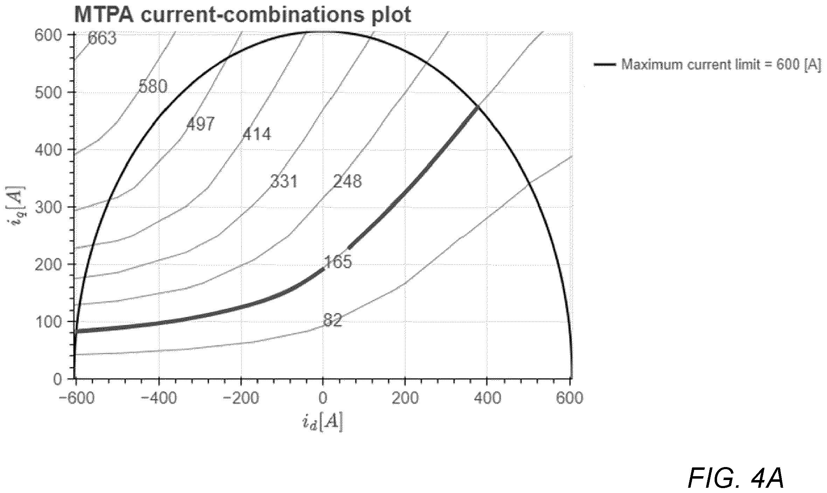

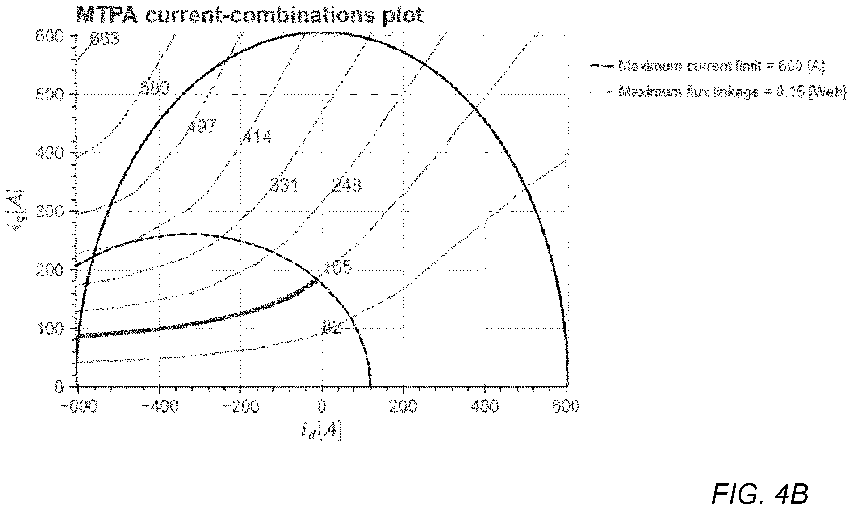

The heat generation system **200** further comprises a factor obtainer **230**. The factor obtainer **230** is configured to obtain a factor $k^*$ that corresponds to an interval of valid positions on the iso-torque line for a given torque. For explaining this further, reference is made to **FIGS. 4A-B** where MTPA refers to maximum torque per Ampere. Here the iso-torque lines are shown for an interior permanent magnet synchronous motor, i.e. for an electrical machine **10**. The diagrams show the d current on the x axis, and the q current on the y axis. In **FIG. 4A** the iso-torque lines are shown with a current constraint only, while in **FIG. 4B** the flux linkage constraint is added as well.

In the *dq* coordinate system, the currents that oscillate with the synchronous frequency with a constant amplitude will appear as constant quantities. Consequently, a conventional PI controller can be used to reach the defined references accurately. The *dq* currents can be calculated if the phase currents and the rotor position are available:

$$\begin{bmatrix} i_d \\ i_q \end{bmatrix} = \frac{2}{3} \cdot \begin{bmatrix} \cos\theta & \cos\left(\theta - \frac{2\pi}{3}\right) & \cos\left(\theta + \frac{2\pi}{3}\right) \\ -\sin\theta & -\sin\left(\theta - \frac{2\pi}{3}\right) & -\sin\left(\theta + \frac{2\pi}{3}\right) \end{bmatrix} \begin{bmatrix} i_a \\ i_b \\ i_c \end{bmatrix} (5)$$

Where $\theta$ is the rotor's angular position in relation to when the permanent magnet flux is aligned with phase A. The *dq* current together with the permanent magnet flux and the *dq* inductances give the torque as

$$T = \frac{3}{2}pp\left(\psi_{PM}i_q - i_d i_q\left(L_q - L_d\right)\right) \quad (6)$$

where *pp* is the number of pole pairs, $\psi_{PM}$ is the permanent magnet flux and $L_d L_q$ are the inductances on the *d* and *q* axes, respectively. Approximating the inductances and permanent magnet flux to be constant, each torque can be realized with an infinite amount of different current combinations as shown in **FIGS. 4A-B**. In actuality, the inductances and permanent magnet flux have non-linear relationships with the currents, which makes the torque estimation more complicated than what the equation (6) insinuates. However, the reasoning holds since the values of the parameters is proven to remain positive regardless of the amplitude of the current.

Several lines are drawn in the diagrams in **FIG. 4A-B,** corresponding to the iso-torque lines marking all combinations of the d and q currents generating the same torque. Also, the semi-circle represents the maximum allowed current range. As is clear from the diagrams in **FIGS. 4A-B,** a specific torque can be obtained by a multitude of current combinations. In the shown example the d current can be controlled from approximately - 600A to +600A, while the q current can be controlled from 0A to approximately 600A. Starting in **FIG. 4A** there is no flux linkage limitation to the torque control, i.e. the speed is sufficiently low for allowing all possible current combinations. Considering the torque of 165Nm, indicated by the thick line, the valid values of the d current range from approximately -600A to +3 80A. Correspondingly, the valid values of the q current range from approximately +80A to +470A. For the d current, the factor *k\** ranges from 0 to 1, i.e. *k=0* corresponds to -600A, while *k=1* corresponds to +380A.

Now considering the diagram of **FIG. 4B,** the speed of the electrical machine **10** has increased thereby introducing a constraint corresponding to the maximum achievable flux linkage. This constraint is shown as the semi-dashed line, delimiting the valid current values. For the same reference torque of 165 Nm, the valid values of the d current now range from approximately -600A to -10A. A cropped factor $k^*_{crop}$ is then determined based on the original factor *k\** as ranging from 0 to approximately 0,6. It should be noted that in cases when the flux linkage constraint is not reached, then $k^*_{crop} = k^*$ (i.e. ranging from 0 to 1).

Again referring to **FIG. 3,** the factor obtainer **230** is configured to obtain the cropped factor $k^*_{crop}$ using the normalized reference torque $T^*_{norm}$ as input. For this, the factor obtainer **230** may be configured to call one or more reference current lookup tables **232**. Such lookup table **232** comprises information of the valid range of d and/or q current values for each torque level. The lookup table **232** may be three-dimensional, also comprising information of the normalized factor *k\**. By using the normalized reference torque $T^*_{norm}$ as input to the lookup table **232,** and using the factor *k\** as reference, the lookup table **232** will return, either directly or indirectly via the factor obtainer **230,** the cropped factor $k^*_{crop}$.

The heat generation system **200** further comprises a d and q current value obtainer **240**. The d and q current value obtainer **240** is configured to obtain, based on the cropped reference torque $T^*_{crop}$ and based on the cropped factor $k^*_{crop}$, the minimum and maximum d current values $I_{dmax}, I_{dmin}$ for obtaining the cropped reference torque $T^*_{crop}$. The d and q current value obtainer is further configured to obtain the minimum and maximum q current values $I_{qmax}, I_{qmin}$. These d and q current values may be obtained by calling a current value lookup table **242** using the cropped reference torque $T^*_{crop}$ and the minimum/maximum of the cropped factor $k^*_{crop}$ as input, and the current value lookup table **242** will return the minimum and maximum d and q current values.

Hence, the d and q current value obtainer **240** obtains a first set of d and q current values $I_{dmax}, I_{dmin}$ resulting in the reference torque $T^*_{crop}$. and a second set of d and q current values $I_{qmax}, I_{qmin}$ resulting in the same reference torque $T^*_{crop}$. Optionally, the q current values can be obtained from looked up d current values and the reference torque $T^*_{crop}$.

The heat generation system **200** further comprises an oscillator **250** being configured to produce heat in the electrical machine **10** by oscillating the d and q currents between the first and second set of current values while maintaining the reference torque $T^*_{crop}$.

To find the corresponding $q$ current value for each torque and $d$ current, the objective function can be formulated as:

$$f(i_q) = \left| \frac{3}{2} pp \left( \psi_{PM}(i_{dset}, i_q) \cdot i_q - i_{dset} i_q \cdot \left( L_q(i_{dset}, i_q) - L_d(i_{dset}, i_q) \right) \right) - T_{set} \right| \quad (7)$$

and the $q$-current matrix is populated with the resulting q-current value from the minimization of Equation (7).

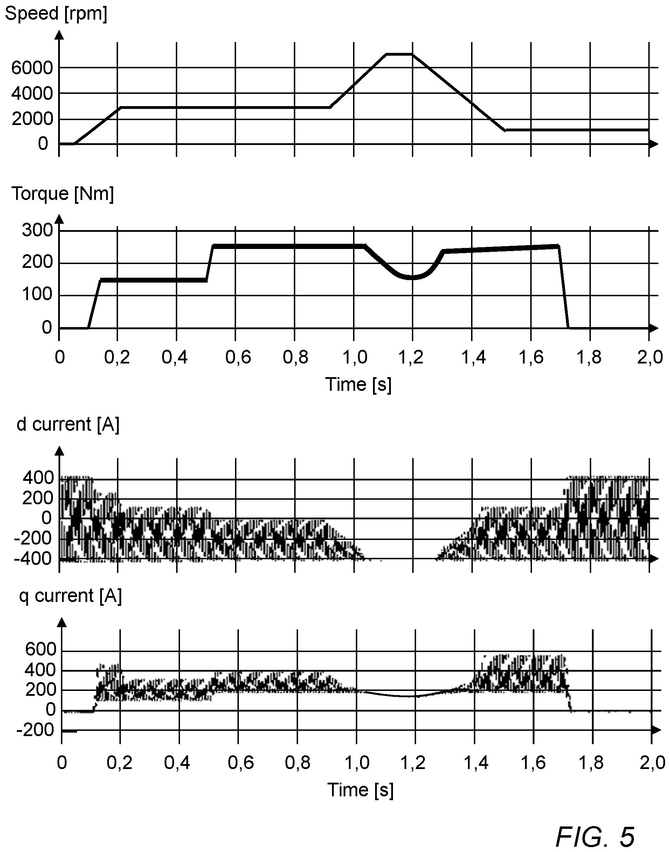

Examples of simulations are shown in **FIG. 5**. The speed and torque combination of the simulations was chosen to cover operational points both when the speed does not limit (i.e. when the cropped reference torque $T^*_{crop}$ equals the requested torque $T^*$ of the electrical machine **10**), as well as when the speed do limit the realizable current combinations (i.e. when the cropped reference torque $T^*_{crop}$ is less than the requested torque $T^*$ of the electrical machine **10**).

The speed and torque results from the simulations are visualized in the upper two diagrams. In addition, the current references are found in the bottom two diagrams. The resulting torque follows the reference well even though the current references and the resulting currents oscillate. When the speed increases the ranges of the currents are decreased. Eventually the speed becomes so high that the algorithm must derate the torque. In this instant only one current combination that creates the derated torque reference can be realized, and the dq currents become constant. When the speed decreases the torque reference is no longer derated and the current references start to oscillate once more when a range of current combinations can be realized.

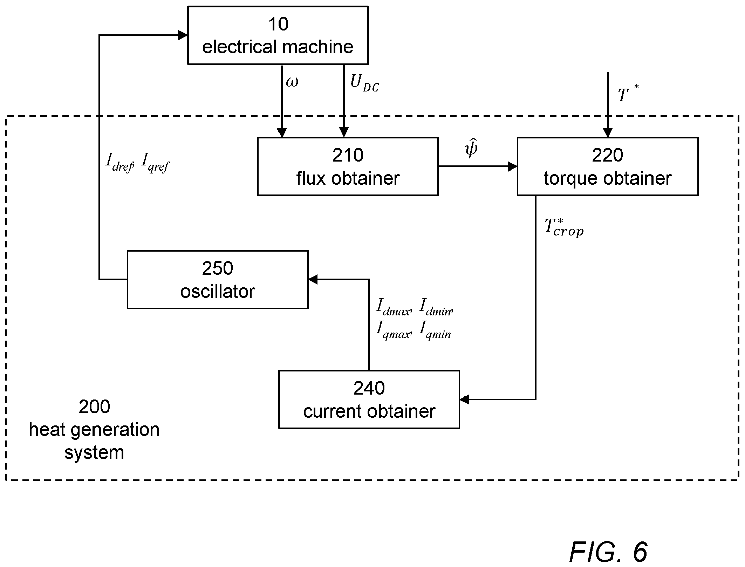

**FIG. 6** is a schematic diagram of the heat generation system **300** according to one example. In general, the heat generation system **300** is a simplified example as compared to the heat generation system **200** described with reference to **FIG. 3**. The heat generation system **300** comprises a flux obtainer **310** configured to obtain a maximum achievable flux linkage $\hat{\psi}$ of an electrical machine **10**. The heat generation system **300** further comprises a torque obtainer **320** configured to obtain a reference torque $T^*_{crop}$ of the electrical machine **10** based on the maximum achievable flux linkage $\hat{\psi}$. The heat generation system **300** comprises a current obtainer **340**. The current obtainer **340** is configured to obtain a first set of d and q current values $I_{dmax}, I_{qmax}$ resulting in the reference torque $T^*_{crop}$, and to obtain a second set of d and q current values $I_{dmin}, I_{qmin}$ resulting in the same reference torque $T^*_{crop}$. As explained previously, this is preferably done by calling one or more lookup tables. The heat generation system **300** further comprises a heat producer **350**. The heat producer **350** is in the form of an oscillator, configured to produce heat in the electrical machine **10** by transmitting control currents $I_{dref}, I_{qref}$ to the electrical machine **10**. The control currents $I_{dref}, I_{qref}$ are selected as the first set of d and q current values $I_{dmax}, I_{qmax}$ and the second set of d and q current values $I_{dmin}, I_{qmin}$ in an alternating manner, thereby resulting in oscillating the d and q currents between the first and second set of current values $I_{dmax}, I_{qmax}, I_{dmin}, I_{qmin}$ while maintaining the reference torque $T^*_{crop}$.

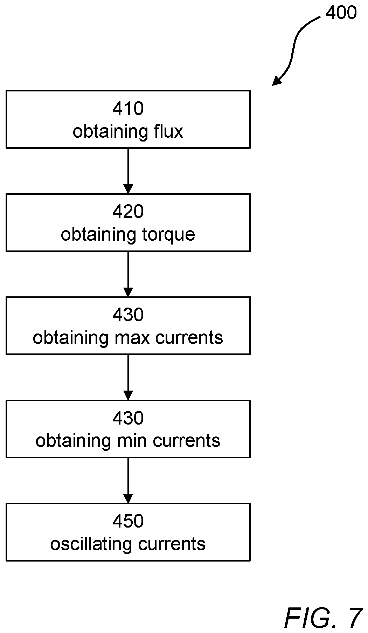

**FIG. 7** is a schematic diagram of a computer-implemented method **400** for producing heat in an electrical machine **10**. The method **400** comprises obtaining **410,** by processing circuitry of a computer system, a maximum achievable flux linkage $\psi$ of an electrical machine **10**. The method **400** further comprises obtaining **420,** by the processing circuitry, a reference torque $T^*_{crop}$ of the electrical machine **10** based on the maximum achievable flux linkage $\psi$. The method **400** comprises obtaining **430,** by the processing circuitry, a first set of d and q current values $I_{dmax}, I_{qmax}$ resulting in the reference torque $T^*_{crop}$, and obtaining **440,** by the processing circuitry, a second set of d and q current values $I_{dmin}, I_{qmin}$ resulting the reference torque $T^*_{crop}$. The method **400** further comprises producing **450,** by the processing circuitry, heat in the electrical machine **10** by oscillating the d and q currents between the first and second set of current values $I_{dmax}, I_{qmax}, I_{dmin}, I_{qmin}$ while maintaining the reference torque $T^*_{crop}$.

**FIG. 8** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518**. All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system comprising processing circuitry configured to: obtain a maximum achievable flux linkage ($\psi$) of an electrical machine (**10**), obtain a reference torque ($T^*_{crop}$) of the electrical machine (**10**) based on the maximum achievable flux linkage ($\psi$), obtain a first set of d and q current values ($I_{dmax}$, $I_{qmax}$) resulting in the reference torque ($T^*_{crop}$), obtain a second set of d and q current values ($I_{dmin}$, $I_{qmin}$) resulting the reference torque ($T^*_{crop}$), and produce heat in the electrical machine (**10**) by oscillating the d and q currents between the first and second set of current values ($I_{dmax}$, $I_{qmax}$, $I_{dmin}$, $I_{qmin}$) while maintaining the reference torque ($T^*_{crop}$).

**Example 2:** The computer system of Example 1, wherein the processing circuitry is further configured to: obtain the maximum achievable flux linkage ($\hat{\psi}$) based on the angular frequency ($\omega$) of the electrical machine (**10**).

**Example 3:** The computer system of Example 2, wherein the processing circuitry is further configured to: obtain the maximum achievable flux linkage ($\psi$) as $\hat{\psi} = \frac{U_{DC}}{\sqrt{3}\cdot\omega}$, where $U_{DC}$ is the terminal voltage of the electrical machine (**10**).

**Example 4:** The computer system of any of Examples 1 to 3, wherein the processing circuitry is further configured to: obtain a maximum torque ($T^*_{max}$) of the electrical machine (**10**) based on the maximum achievable flux linkage ($\psi$), and crop the reference torque ($T^*_{crop}$) of the electrical machine (**10**) based on the maximum torque ($T^*_{max}$).

**Example 5:** The computer system of any of Examples 1 to 4, wherein the processing circuitry is further configured to: obtain the first set of d and q current values ($I_{dmax}$, $I_{qmax}$) as a maximum d current value and a maximum q current value.

**Example 6:** The computer system of any of Examples 1 to 5, wherein the processing circuitry is further configured to: obtain the second set of d and q current values ($I_{dmin}$, $I_{qmin}$) as a minimum d current value and a minimum q current value.

**Example 7:** The computer system of Example 5 and 6, wherein the processing circuitry is further configured to: obtain a normalized current factor ($k^*$) of the electrical machine (**10**) based on the normalized reference torque ($T^*_{norm}$).

**Example 8:** The computer system of Example 7, wherein the processing circuitry is further configured to: obtain a cropped normalized current factor ($k^*_{crop}$) based on the normalized reference torque ($T^*_{norm}$).

**Example 9:** The computer system of any of Examples 1 to 8, wherein the processing circuitry is further configured to: oscillate the d and q currents between the first and second set of current values ($I_{dmax}$, $I_{qmax}$, $I_{dmin}$, $I_{qmin}$) by a frequency of 10-50 Hz, preferably by a frequency of 15-25 Hz.

**Example 10:** The computer system of Example 1, wherein the processing circuitry is further configured to: obtain the maximum achievable flux linkage ($\psi$) based on the angular frequency ($\omega$) of the electrical machine (**10**), obtain the maximum achievable flux linkage ($\psi$) as $\hat{\psi} = \frac{U_{DC}}{\sqrt{3}\cdot\omega}$, where $U_{DC}$ is the terminal voltage of the electrical machine (**10**), obtain a maximum torque ($T^*_{max}$) of the electrical machine (**10**) based on the maximum achievable flux linkage ($\psi$), crop the reference torque ($T^*_{crop}$) of the electrical machine (**10**) based on the maximum torque ($T^*_{max}$), obtain the first set of d and q current values ($I_{dmax}$, $I_{qmax}$) as a maximum d current value and a maximum q current value from a current reference lookup table (**242**), obtain the second set of d and q current values ($I_{dmin}$, $I_{qmin}$) as a minimum d current value and a minimum q current value from a current reference lookup table (**242**), obtain a normalized current factor ($k^*$) of the electrical machine (**10**) based on the normalized reference torque ($T^*_{norm}$), obtain a cropped normalized current factor ($k^*_{crop}$) based on the normalized reference torque ($T^*_{norm}$), and oscillate the d and q currents between the first and second set of current values ($I_{dmax}$, $I_{qmax}$, $I_{dmin}$, $I_{qmin}$) by a frequency of 10-50 Hz, preferably by a frequency of 15-25 Hz, thereby producing heat in windings and/or a stator of the electrical machine (**10**).

**Example 11:** A vehicle (**1**) comprising the computer system of any of Examples 1-10.

**Example 12:** The vehicle of Example 11, further comprising: an electrical machine (**10**), and a heat generation system (**200, 300**) configured to transmit a request for increased heat generation to the computer system.

**Example 13:** A computer-implemented method (**400**), comprising: obtaining (**410**), by processing circuitry of a computer system, a maximum achievable flux linkage ($\psi$) of an electrical machine (**10**), obtaining (**420**), by the processing circuitry, a reference torque ($T^*_{crop}$) of the electrical machine (**10**) based on the maximum achievable flux linkage ($\hat{\psi}$), obtaining (**430**), by the processing circuitry, a first set of d and q current values ($I_{dmax}$, $I_{qmax}$) resulting in the reference torque ($T^*_{crop}$), obtaining (**440**), by the processing circuitry, a second set of d and q current values ($I_{dmin}$, $I_{qmin}$) resulting the reference torque ($T^*_{crop}$), and producing (**450**), by the processing circuitry, heat in the electrical machine (**10**) by oscillating the d and q currents between the first and second set of current values ($I_{dmax}$, $I_{qmax}$, $I_{dmin}$, $I_{qmin}$) while maintaining the reference torque ($T^*_{crop}$).

**Example 14:** The method of Example 13, further comprising: obtaining, by the processing circuitry, the maximum achievable flux linkage ($\psi$) based on the angular frequency ($\omega$) of the electrical machine (**10**).

**Example 15:** The method of Example 13 or 14, further comprising: obtaining, by the processing circuitry, a maximum torque ($T^*_{max}$) of the electrical machine based on the maximum achievable flux linkage ($\psi$), and cropping, by the processing circuitry, the reference torque ($T^*_{crop}$) of the electrical machine (**10**) based on the maximum torque ($T^*_{max}$).

**Example 16:** The method of any of Examples 13 to 15, further comprising: obtaining, by the processing circuitry, the first set of d and q current values ($I_{dmax}$, $I_{qmax}$) as a maximum d current value and a maximum q current value.

**Example 17:** The method of any of Examples 13 to 16, further comprising: obtaining, by the processing circuitry, the second set of d and q current values ($I_{dmin}$, $I_{qmin}$) as a minimum d current value and a minimum q current value.

**Example 18:** The method of any of Examples 13 to 17, wherein the processing circuitry is further configured to: obtain a normalized current factor (**k\***) of the electrical machine (**10**) based on the normalized reference torque ($T^*_{norm}$).

**Example 19:** A computer program product comprising program code for performing, when executed by the processing circuitry, the method of any of Examples 14 to 18.

**Example 20:** A non-transitory computer-readable storage medium comprising instructions, which when executed by the processing circuitry, cause the processing circuitry to perform the method of any of Examples 14 to 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system comprising processing circuitry configured to:

   obtain a maximum achievable flux linkage ($\psi$) of an electrical machine (**10**),

   obtain a reference torque ($T^*_{crop}$) of the electrical machine (**10**) based on the maximum achievable flux linkage ($\psi$),

   obtain a first set of d and q current values ($I_{dmax}$, $I_{qmax}$) resulting in the reference torque ($T^*_{crop}$),

   obtain a second set of d and q current values ($I_{dmin}$, $I_{qmin}$) resulting in the reference torque ($T^*_{crop}$), and produce heat in the electrical machine (**10**) by oscillating the d and q currents between the first and second set of current values ($I_{dmax}$, $I_{qmax}$, $I_{dmin}$, $I_{qmin}$) while maintaining the reference torque ($T^*_{crop}$).

2. The computer system of claim 1, wherein the processing circuitry is further configured to:
   obtain the maximum achievable flux linkage ($\psi$) based on the angular frequency ($\omega$) of the electrical machine (**10**).

3. The computer system of claim 2, wherein the processing circuitry is further configured to:
   obtain the maximum achievable flux linkage ($\psi$) as $\widehat{\psi} = \frac{U_{DC}}{\sqrt{3}\cdot\omega}$, where $U_{DC}$ is the terminal voltage of the electrical machine (**10**).

4. The computer system of any of claims 1 to 3, wherein the processing circuitry is further configured to:

   obtain a maximum torque ($T^*_{max}$) of the electrical machine (**10**) based on the maximum achievable flux linkage ($\psi$), and

   crop the reference torque ($T^*_{crop}$) of the electrical machine (**10**) based on the maximum torque ($T^*_{max}$).

5. The computer system of any of claims 1 to 4, wherein the processing circuitry is further configured to:
   obtain the first set of d and q current values ($I_{dmax}$, $I_{qmax}$) as a maximum d current value and a maximum q current value.

6. The computer system of any of claims 1 to 5, wherein the processing circuitry is further configured to:
   obtain the second set of d and q current values ($I_{dmin}$, $I_{qmin}$) as a minimum d current value and a minimum q current value.

7. The computer system of claim 5 and 6, wherein the processing circuitry is further configured to:
   obtain a normalized current factor ($k^*$) of the electrical machine (**10**) based on the normalized reference torque ($T^*_{norm}$).

8. The computer system of claim 7, wherein the processing circuitry is further configured to:

obtain a cropped normalized current factor ( $k^*_{crop}$ ) based on the normalized reference torque ( $T^*_{norm}$ ).

9. The computer system of any of claims 1 to 8, wherein the processing circuitry is further configured to:
   oscillate the d and q currents between the first and second set of current values ($I_{dmax}$, $I_{qmax}$, $I_{dmin}$, $I_{qmin}$) by a frequency of 10-50 Hz, preferably by a frequency of 15-25 Hz.

10. The computer system of claim 1, wherein the processing circuitry is further configured to:

   obtain the maximum achievable flux linkage ($\psi$) based on the angular frequency ($\omega$) of the electrical machine (**10**),

   obtain the maximum achievable flux linkage ($\psi$) as $\hat{\psi} = \frac{U_{DC}}{\sqrt{3}\cdot\omega}$, where $U_{DC}$ is the terminal voltage of the electrical machine (**10**),

   obtain a maximum torque ( $T^*_{max}$ ) of the electrical machine (**10**) based on the maximum achievable flux linkage ($\psi$),

   crop the reference torque ( $T^*_{crop}$ ) of the electrical machine (**10**) based on the maximum torque ( $T^*_{max}$ ),
   obtain the first set of d and q current values ($I_{dmax}$, $I_{qmax}$) as a maximum d current value and a maximum q current value from a current reference lookup table (**242**),
   obtain the second set of d and q current values ($I_{dmin}$, $I_{qmin}$) as a minimum d current value and a minimum q current value from a current reference lookup table (**242**),
   obtain a normalized current factor ($k^*$) of the electrical machine (**10**) based on the normalized reference torque (

   $T^*_{norm}$ ),

   obtain a cropped normalized current factor ( $k^*_{crop}$ ) based on the normalized reference torque ( $T^*_{norm}$ ), and
   oscillate the d and q currents between the first and second set of current values ($I_{dmax}$, $I_{qmax}$, $I_{dmin}$, $I_{qmin}$) by a frequency of 10-50 Hz, preferably by a frequency of 15-25 Hz, thereby producing heat in windings and/or a stator of the electrical machine (**10**).

11. A vehicle (**1**) comprising the computer system of any of claims 1-10.

12. The vehicle (**1**) of claim 11, further comprising: an electrical machine (**10**), and a heat generation system (**200, 300**) configured to transmit a request for increased heat generation to the computer system.

13. A computer-implemented method (**400**), comprising:

   obtaining (**410**), by processing circuitry of a computer system, a maximum achievable flux linkage ($\psi$) of an electrical machine (**10**),

   obtaining (**420**), by the processing circuitry, a reference torque ( $T^*_{crop}$ ) of the electrical machine (**10**) based on the maximum achievable flux linkage ($\psi$),
   obtaining (**430**), by the processing circuitry, a first set of d and q current values ($I_{dmax}$, $I_{qmax}$) resulting in the reference torque ( $T^*_{crop}$ ),
   obtaining (**440**), by the processing circuitry, a second set of d and q current values ($I_{dmin}$, $I_{qmin}$) resulting the reference torque ( $T^*_{crop}$ ), and
   producing (**450**), by the processing circuitry, heat in the electrical machine (**10**) by oscillating the d and q currents between the first and second set of current values ($I_{dmax}$, $I_{qmax}$, $I_{dmin}$, $I_{qmin}$) while maintaining the reference torque ( $T^*_{crop}$ ).

14. A computer program product comprising program code for performing, when executed by the processing circuitry, the method of claim 13.

**15.** A non-transitory computer-readable storage medium comprising instructions, which when executed by the processing circuitry, cause the processing circuitry to perform the method of claim 13.

*FIG. 1*

FIG. 2

FIG. 3

FIG. 4A

*FIG. 4B*

*FIG. 5*

FIG. 6

200 heat generation system

10 electrical machine

210 flux obtainer

220 torque obtainer

240 current obtainer

250 oscillator

$U_{DC}$

$\omega$

$T^*$

$T^*_{crop}$

$\hat{\psi}$

$I_{dmax}, I_{dmin}, I_{qmax}, I_{qmin}$

$I_{dref}, I_{qref}$

400

```
┌─────────────────────────┐
│          410            │
│     obtaining flux      │
└─────────────────────────┘
            │
            ▼
┌─────────────────────────┐
│          420            │
│    obtaining torque     │
└─────────────────────────┘
            │
            ▼
┌─────────────────────────┐
│          430            │
│  obtaining max currents │
└─────────────────────────┘
            │
            ▼
┌─────────────────────────┐
│          430            │
│  obtaining min currents │
└─────────────────────────┘
            │
            ▼
┌─────────────────────────┐
│          450            │
│   oscillating currents  │
└─────────────────────────┘
```

*FIG. 7*

*FIG. 8*

# EUROPEAN SEARCH REPORT

Europäisches
Patentamt
European
Patent Office
Office européen
des brevets

**Application Number**

EP 23 21 8111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/303052 A1 (GESANG WANGJIE [CN] ET AL) 28 September 2023 (2023-09-28) | 1-6,9-15 | INV. H02P21/06 |
| A | * paragraphs [0092], [0095], [0198] - [0200] * <br> * figure 5 * | 7,8 | H02P21/12 |
| Y | US 2023/344375 A1 (LING HEPING [CN] ET AL) 26 October 2023 (2023-10-26) <br> * paragraphs [0007], [0016], [0018], [0020], [0065], [0069] * <br> * figure 3 * | 1,5,6,9, 11-15 | |
| Y | US 2015/295530 A1 (PARK KYEOUNG HUN [KR] ET AL) 15 October 2015 (2015-10-15) <br> * paragraphs [0022], [0025], [0045] * | 2,3,10 | |
| Y | US 2020/266748 A1 (SEKI TOMOHIRO [JP] ET AL) 20 August 2020 (2020-08-20) <br> * paragraphs [0054], [0055] * <br> * figure 4 * | 4,10 | |
| A | CN 116 620 036 A (GM GLOBAL TECH OPERATIONS LLC) 22 August 2023 (2023-08-22) <br> * the whole document * | 1,13 | **TECHNICAL FIELDS SEARCHED (IPC)** <br><br> H02P |
| A | CN 115 782 696 B (XIAOMI AUTOMOBILE TECHNOLOGY CO LTD) 4 July 2023 (2023-07-04) <br> * the whole document * | 1,13 | |

The present search report has been drawn up for all claims

| Place of search | Date of completion of the search | Examiner |
|---|---|---|
| Munich | 4 June 2024 | Roider, Anton |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8111

04-06-2024

| Patent document cited in search report | Publication date | Patent family member(s) | Publication date |
|---|---|---|---|
| US 2023303052 A1 | 28-09-2023 | CN 113525340 A | 22-10-2021 |
| | | EP 4140841 A1 | 01-03-2023 |
| | | US 2023303052 A1 | 28-09-2023 |
| | | WO 2021213253 A1 | 28-10-2021 |
| US 2023344375 A1 | 26-10-2023 | AU 2021438605 A1 | 20-07-2023 |
| | | BR 112023016729 A2 | 10-10-2023 |
| | | CN 113022326 A | 25-06-2021 |
| | | EP 4253125 A1 | 04-10-2023 |
| | | JP 2024510694 A | 11-03-2024 |
| | | KR 20230112151 A | 26-07-2023 |
| | | US 2023344375 A1 | 26-10-2023 |
| | | WO 2022205836 A1 | 06-10-2022 |
| US 2015295530 A1 | 15-10-2015 | NONE | |
| US 2020266748 A1 | 20-08-2020 | EP 3739746 A1 | 18-11-2020 |
| | | JP 6735937 B2 | 05-08-2020 |
| | | JP WO2019138454 A1 | 02-04-2020 |
| | | US 2020266748 A1 | 20-08-2020 |
| | | WO 2019138454 A1 | 18-07-2019 |
| CN 116620036 A | 22-08-2023 | CN 116620036 A | 22-08-2023 |
| | | DE 102022126353 A1 | 17-08-2023 |
| | | US 2023256833 A1 | 17-08-2023 |
| CN 115782696 B | 04-07-2023 | NONE | |

EPO FORM P0459